# EUROPÄISCHE PATENTSCHRIFT

(11) **EP 1 199 226 B1**
(45) Veröffentlichungstag und Bekanntmachung des Hinweises auf die Patenterteilung: **27.04.2005**
(21) Anmeldenummer: 01121961.5
(22) Anmeldetag: 13.09.2001
(51) Int. Cl.: B60R 21/20

(54) **Herstellverfahren für ein Fahrzeug-Innenausstattungsteil mit einer Airbag-Aufreissnaht**
Method for manufacturing an interior vehicle lining with tear line for an airbag
Procédé de fabrication d'un revêtement intérieur de véhicule avec une ligne de rupture pour un coussin gonflable

(30) Priorität: 19.10.2000 DE 10051836
(43) Veröffentlichungstag der Anmeldung: 24.04.2002
(73) Patentinhaber: Bayerische Motoren Werke Aktiengesellschaft, 80809 München (DE)
(72) Erfinder: Roth, Bruno, 84036 Landshut (DE); Jarosch, Oliver, Dr., 80331 München (DE)

(56) Entgegenhaltungen:
- DE-U- 29 823 765
- US-A- 6 065 771
- US-A- 6 106 003

## Beschreibung

Die Erfindung betrifft ein Herstellverfahren für ein Fahrzeug-Innenausstattungsteil gemäß dem Oberbegriff des Patentanspruches 1.

Ein derartiges Verfahren ist aus der US 6 106 003 bekannt. Zum technischen Umfeld wird femer auf die US 6 065 771 sowie auf die EP 0 967 066 A2 verwiesen.

An einem Fahrzeug-Innenausstattungsteil, hinter welchem ein Airbag angeordnet ist, muss eine geeignete Airbag-Aufreißnaht vorgesehen sein, um es dem auslösenden, sich schlagartig ausdehnenden Airbag zu ermöglichen, eine im Innenausstattungsteil vorgesehene und durch die genannte Aufreißnaht definierte sog. Tür oder Klappe zu öffnen bzw. aufzusprengen, so dass der dann aufgeblasene Airbag seine Funktion erfüllen, d.h. in den Fzg.-Innenraum eindringen und dabei als Auffangpolster für einen Fzg.-Insassen im Falle eines Fzg.-Crash's fungieren kann.

Gebildet wird die sog. Airbag-Aufreißnaht üblicherweise durch eine lokale Materialschwächung, d.h. bei einem mehrschichtigen Formkörper, der das Fahrzeug-Innenausstattungsteil bildet, wird der Materialverbund in den einzelnen Schichten partiell geschwächt. Bevorzugt wird hierzu längs der Aufreißnaht partiell Material aus den einzelnen Schichten abgetragen, was - wie die o.g. Schrift zeigt - bspw. mittels Laser erfolgen kann. Bei der Kunststoff-Trägerschicht des Formkörpers bzw. Innenausstattungsteiles kann die Airbag-Aufreißnaht alternativ auch direkt bei der Herstellung dieser Schicht eingearbeitet werden, d.h. längs der besagten Aufreißnaht wird die bspw. durch Spritzgießen gefertigte Trägerschicht dünner geformt. Hierdurch kann zumindest ein nachträglich durchzuführender, relativ aufwendiger Materialschwächungsprozess eingespart werden.

Wie auch die Erzeugung einer Airbag-Aufreißnaht in der Schaumschicht eines Fzg.-Innenausstattungsteiles einfacher gemacht werden kann, soll mit der vorliegenden Erfindung aufgezeigt werden (=Aufgabe der Erfindung). Die Lösung dieser Aufgabe erfolgt durch die Merkmale des Anspruchs 1. Vorteilhafte Weiterbildungen sind Inhalt der Unteransprüche.

Erfindungsgemäß wird bereits beim Herstellen der Schaumschicht des Fzg.-Innenaustattungsteiles in dieser die Aufreißnaht erzeugt, so dass kein nachträglicher aufwendiger Materialabtrag erforderlich ist. Vorgeschlagen wird, hierfür ein geeigetes sog. Trennelement einzubringen, welches längs der Aufreißnaht verläuft, so dass nach dem Herstellen der Schaumschicht beidseitig dieses Trennelementes jeweils übliche Schaumformkörper vorliegen, die über das besagte Trennelement zwar geringfügig miteinander verbunden sein können, jedoch in Form dieses Trennelementes zwischen sich einen Fremdkörper oder eine Störstelle aufweisen, die bezüglich der kompletten Schaumschicht eine Unstetigkeitsstelle bildet. Längs dieser Unstetigkeitsstelle, die ebenfalls eine Schwächung des Schaumschicht-Materialverbundes verursacht, kann dann die Schaumschicht unter dem Druck des ausgelösten und sich dabei schlagartig ausdehnenden Airbags einfach aufreißen. Im Rahmen des Herstellungsprozesses der Schaumschicht wird dabei das Trennelement in den Formhohlraum des Schäumwerkzeuges eingebracht, in welchem daraufhin die Schaumschicht entsprechend der vorgegebenen Form hergestellt wird. Bevorzugt ist in dieses Werkzeug auch bereits die Trägerschicht eingelegt, an bzw. auf welcher dann das Trennelement befestigt sein kann, während das der Trägerschicht abgewandte Ende des Trennelementes bei der Herstellung der Schaumschicht im entsprechenden Werkzeug bspw. durch eine Klemmleiste oder dgl. gehalten werden kann.

Es ist aber auch möglich, das Trennelement derartig elastisch und/oder flexibel auszubilden, dass dieses beim Einbringen der Schaummasse in den Formhohlraum des Schäum-Werkzeuges einen relativ freien Schaumfluss ermöglichen, d.h. freigeben (und hierzu bspw. umknicken) kann, dass sich jedoch andererseits dieses Trennelement bei vollständig ausgefülltem Formhohlraum wieder selbsttätig aufrichtet, um beim Aushärten der eingebrachten Schaumstoffmasse die trennende Aufreißnaht bilden zu können. Bei einer derartigen Gestaltung des Trennelementes, welches hierfür auch eine ausreichende Starrheit aufweisen muss, wird dann das der Trägerschicht abgewandte Ende des Trennelementes bei der Herstellung der Schaumschicht im entsprechenden Werkzeug nicht durch eine Klemmleiste oder dgl. gehalten. In diesem Falle kann dann das Trennelement vor dem Herstellen der Schaumschicht lediglich auf die vorgefertigte Trägerschicht aufgesetzt und geeignet an dieser befestigt werden, bspw. durch einen Kunststoff-Schweißprozess oder durch Kleben oder Nieten oder ähnliches.

Grundsätzlich bestehen verschiedene Möglichkeiten für die Ausgestaltung des sog. Trennelementes. So kann dieses partiell schaumdurchlässig sein, d.h. einen teilweisen Durchtritt von noch nicht ausgehärtetem Schaummaterial ermöglichen und hierfür insbesondere netz- oder gewebeartig oder perforiert ausgebildet sein. Über dieses in der fertigen Schaumschicht bspw. stegartig verlaufende Trennelement kann dann eine gewissen Verbindung zwischen den beiden beidseitig desselben liegenden Schaumformkörpern bestehen, die dabei jedoch weiterhin zwischen sich eine trennende Unstetigkeitsstelle aufweisen. Eine zu intensive Verbindung zwischen dem Trennelement und dem (benachbarten) Schaustoff-Material sollte jedoch nicht entstehen, insbesondere auch dann nicht, wenn das Trennelement durch ein in sich geschlossenes flächiges Teil oder Band gebildet wird. Im Hinblick hierauf kann das Trennelement bezüglich der Schaumschicht allenfalls gering, bevorzugt nicht haftend ausgebildet sein. Realisiert werden kann diese genannte Eigenschaft bspw. dadurch, dass die Oberfläche des Trennelementes nach Art eines Bürstenprofils mit Härchen und/oder einer nichthaftenden Beschichtung versehen ist. Selbstverständlich kann auch das Trennelement selbst vollständig in nichthaftendem Polypropylen oder in einem anderen geeigneten, am Material der Schaumschicht nicht haftenden Werkstoff ausgeführt sein.

In einer weiteren Ausführungsform, die ausführlicher anhand der beigefügten Prinzipskizze - diese zeigt einen Teil-Schnitt durch ein bevorzugtes Ausführungsbeispiel eines erfindungsgemäß hergestellten Fzg.-Innenausstattungsteiles - erläutert wird, wird das Trennelement bei der Herstellung der Trägerschicht in diese eingebunden. Dabei kann das Trennelement durch einen geeignet ausgerichteten Abschnitt einer teilweise auch parallel zur Trägerschicht verlaufenden Zusatzschicht - bevorzugt in Form eines Gewebes oder dgl. - gebildet werden, die weiterhin als Scharnierleiste für die Trägerschicht in de Umgebung der Airbag-Aufreißnaht fungiert.

In der beigefügten Prinzipskizze ist mit der Bezugsziffer 1 die sog. Trägerschicht eines nicht weiter dargestellten Fzg.-Innenausstattungsteiles bezeichnet, hinter welchem nach Einbau in einem Fahrzeug/PKW ein Airbag angeordnet ist. Neben der Kunststoff-Trägerschicht 1 besteht dieses Innenausstattungsteil 1 aus einer darauf aufgebrachten Schaumschicht 2 sowie einer darüber liegenden Dekorschicht 3. An bzw. in diesem Innenausstattungsteil ist eine sog. Airbag-Aufreißnaht 4 vorgesehen, die es einem nicht dargestellten Airbag, der sich auf der der Schaumschicht 2 abgewanden Seite der Trägerschicht 1 befindet, erlaubt, nach seiner Aktivierung dieses Innenausstattungsteil aufzubrechen bzw. zu durchbrechen.

In der Dekorschicht 3 wird diese gestrichelt dargestellte, im wesentlichen senkrecht zu den einzelnen Schichten 1 bis 3 des Innenausstattungsteiles verlaufende Aufreißnaht 4 durch eine Materialschwächung gebildet, die in die der Schaumschicht 2 zugewandte Seite der Dekorschicht 3 eingebracht wird, und zwar vor dem Verbinden der Dekorschicht 3 mit der Schaumschicht 2. Auch in der Trägerschicht 1 kann diese Aufreißnaht 4 durch eine Materialschwächung gebildet sein, die direkt beim Herstellen dieser Trägerschicht 1 (bspw. durch Spritzgießen) in der der Schaumschicht 2 zugewandten Seite der Trägerschicht 1 vorgesehen wird.

In der Schaumschicht 2 wird beim Herstellen derselben die Aufreißnaht 4 durch ein sog. Trennelement 5 gebildet, welches in den nicht dargestellten Formhohlraum des für dieses Herstellen benutzten Formschäum-Werkzeuges eingebracht ist. Linksseitig sowie rechtsseitig dieses sich stegförmig durch die Schaumschicht 2 hindurch erstreckenden Trennelementes 5 werden quasi eigenständige Schaumformkörper gebildet, die zwar über bzw. durch dieses Trennelement 5 geringfügig miteinander verbunden sein können, wobei jedoch andererseits dieses Trennelement 5 bezüglich der gesamten Schaumschicht 2 bzw. bezüglich deren Materialverbund eine derartige Unstetigkeitsstelle bildet, dass - hervorgerufen durch einen auslösenden Airbag - das bereits kurz beschriebene Aufbrechen des Innenausstattungsteiles bzw. der einzelnen Schichten 1 bis 3 längs der Aufreißnaht 4 erfolgen kann. Dabei erstreckt sich selbstverständlich die Aufreißnaht 4 und somit auch das Trennelement 5 über eine gewisse Länge senkrecht zur Zeichenebene im flächigen Innenausstattungsteil.

Beim hier erläuterten und figürlich dargestellten Ausführungsbeispiel wird das Trennelement 5 durch einen Abschnitt einer teilweise auch parallel zur Trägerschicht 1 verlaufenden Zusatzschicht 6 gebildet, die als Scharnierleiste 7 für die Trägerschicht 1 in der Umgebung der Aufreißnaht 4 fungiert, d.h. längs dieser sich im wesentlichen senkrecht zur Zeichenebene erstreckenden Scharnierleiste 7 klappt dann das in der Aufreißnaht 4 aufreißende Innenausstattungsteil (in der Figurendarstellung nach oben) auf. Bevorzugt wird dabei die Zusatzschicht 6 und somit auch das Trennelement 5, das nichts anderes als ein abgewinkelt angeordneter Randstreifen derselben ist, durch ein geeignetes Gewebe oder dgl. gebildet.

Im Rahmen des Herstellungsprozesses der Trägerschicht 1 bspw. durch Spritzgießen wird dabei das die Trägerschicht 1 bildende Material auf die Zusatzschicht 6 aufgebracht, wobei gleichzeitig der das Trennelement 5 bildende Abschnitt abgewinkelt angeordnet wird, so dass das Trennelement 5 auch die Trägerschicht 1 im Bereich der Aufreißnaht 4 im wesentlichen senkrecht durchdringt. Das Trennelement 5 bildet somit vorteilhafterweise auch in der Trägerschicht 1 eine bzw. die Aufreißnaht 4, so dass ggf. auf die hier noch vorgesehene, nicht mit einer separaten Bezugsziffer versehene Materialschwächung verzichtet werden kann, jedoch kann dies sowie eine Vielzahl weiterer Details durchaus abweichend von obigen Erläuterungen gestaltet sein, ohne den Inhalt der Patentansprüche zu verlassen.

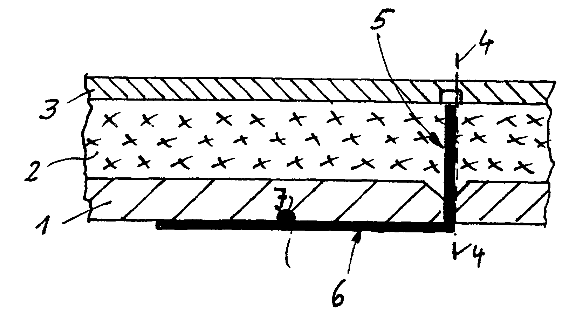

## Patentansprüche

1. Herstellverfahren für ein Fahrzeug-Innenausstattungsteil mit einer Airbag-Aufreißnaht (4), das neben einer insbesondere Kunststoff-Trägerschicht (1) eine darauf aufgebrachte Schaumschicht (2) sowie eine darüber liegende Dekorschicht (3) aufweist, wobei die Aufreißnaht (4) im wesentlichen senkrecht durch die einzelnen Schichten (1-3) verläuft, und
längs der gewünschten Airbag-Aufreißnaht (4) ein Trennelement (5) vorgesehen ist, weiches eine Unstetigkeitsstelle in der ansonsten durchgängigen Schaumschicht (2) bildet,
**dadurch gekennzeichnet, dass**
die Airbag-Aufreißnaht (4) durch eine lokale partielle Schwächung der Trägerschicht (1), der Schaumschicht (2) und der Dekorschicht (3) gebildet wird, wobei das Trennelement (5) beim Herstellen der Schaumschicht (2) in einen Formhohlraum eines entsprechenden Werkzeuges derart eingebracht wird daß es sich stegartig durch die Schaumschicht (2) hindurch erstreckt.

2. Herstellverfahren nach Anspruch 1,
**dadurch gekennzeichnet, dass** ein partiell schaumdurchlässiges, insbesondere netz- oder gewebeartig oder perforiert ausgebildetes Trennelement (5) verwendet wird.

3. Herstellverfahren nach Anspruch 1 oder 2,
**dadurch gekennzeichnet, dass** ein ausreichend flexibles, bezüglich der Schaumschicht (2) allenfalls gering, bevorzugt nicht haftend ausgebildetes Trennelement (5) verwendet wird.

4. Herstellverfahren nach einem der vorangegangenen Ansprüche,
**dadurch gekennzeichnet, dass** ein Trennelement (5) verwendet wird, dessen Oberfläche nach Art eines Bürstenprofils mit Härchen und/oder nichthaftenden Beschichtung versehen ist.

5. Herstellverfahren nach einem der vorangegangenen Ansprüche,
**dadurch gekennzeichnet, dass** das Trennelement (5) vor dem Herstellen der Schaumschicht (2) auf die vorgefertigte Trägerschicht (1) aufgesetzt und geeignet an dieser befestigt wird.

6. Herstellverfahren nach einem der Ansprüche 1 - 4,
**dadurch gekennzeichnet, dass** das Trennelement (5) bei der Herstellung der Trägerschicht (1) in diese eingebunden wird.

7. Herstellverfahren nach Anspruch 6,
**dadurch gekennzeichnet, dass** das Trennelement (5) durch einen geeignet ausgerichteten Abschnitt einer teilweise auch parallel zur Trägerschicht (1) verlaufenden Zusatzschicht (6) gebildet wird, die als Scharnierleiste (7) für die Trägerschicht (1) in der Umgebung der Airbag-Aufreißnaht (4) fungiert.

8. Herstellverfahren nach einem der vorangegangenen Ansprüche,
**dadurch gekennzeichnet, dass** das der Trägerschicht (1) abgewandte Ende des Trennelementes (5) bei der Herstellung der Schaumschicht (2) im entsprechenden Werkzeug durch eine Klemmleiste oder dgl. gehalten wird.

## Claims

1. A method of producing a part of the interior trim of a vehicle and comprising an airbag tear seam (4) made up of a substrate layer (1), more especially of a plastics material, a foam layer (2) applied thereto and a decorative layer (3) at the top, wherein the tear seam (4) extends substantially perpendicularly through the individual layers (1-3), and a separating element (5) is provided along the required airbag tear seam (4) and forms a discontinuity in the otherwise continuous foam layer (2),
**characterised in that**
the airbag tear seam (4) is formed by a local weak part of the substrate layer (1), foam layer (2) and decorative layer (3), wherein the separating element (5) is inserted into a mould cavity of a suitable tool during production of the foam layer (2) so as to extend like a web through the foam layer (2).

2. A method according to claim 1, **characterised in that** the separating element (5) is partially permeable to foam and more especially is netlike or woven or perforated.

3. A method according to claim 1 or 2, **characterised in that** the separating element (5) is sufficiently flexible and adheres only slightly or preferably not at all to the foam layer (2).

4. A method according to any of the preceding claims, **characterised in that** the surface of the separating element (5) is covered with hairs and/or a non-adhesive coating like a brush profile.

5. A method according to any of the preceding claims, **characterised in that** before production of the foam layer (2), the separating element (5) is placed on and suitably fastened to the prefabricated substrate layer (1).

6. A method according to any one of claims 1 to 4, **characterised in that** the separating element (5) is incorporated in the substrate layer (1) during production thereof.

7. A method according to claim 6, **characterised in that** the separating layer (5) is in the form of a suitably aligned portion of an additional layer (6), part of which also extends parallel to the substrate layer (1) and serves as a hinge strip (7) for the substrate layer (1) in the neighbourhood of the airbag tear seam (4).

8. A method according to any of the preceding claims, **characterised in that** during production of the foam layer (2) the end of the separating element (5) remote from the substrate layer (1) is held in the appropriate tool by a clamping strip or the like.

## Revendications

1. Procédé de fabrication d'un revêtement intérieur de véhicule, avec une ligne de rupture d'un coussin gonflable (4), qui présente une couche décorative (3) posée sur une couche de mousse (2) appliquée sur une couche support (1) en matière synthétique, la ligne de rupture (4) étant essentiellement perpendiculaire à chacune des couches (1 à 3), et avec un élément séparateur (5), prévu le long de la ligne de rupture voulue d'un coussin gonflable (4), qui forme un point de discontinuité dans la couche de mousse (2) continue par ailleurs,
**caractérisé en ce que**
la ligne de rupture d'un coussin gonflable (4) est formée par une atténuation locale partielle de la couche support (1), de la couche de mousse (2) et de la couche décorative (3), l'élément séparateur (5) étant inséré, lors de la fabrication de la couche de mousse (2), dans une empreinte d'un outil correspondant de telle manière qu'il traverse la couche de mousse (2) comme une tige.

2. Procédé de fabrication selon la revendication 1,
**caractérisé en ce qu'**
on utilise un élément séparateur (5) partiellement perméable à la mousse, notamment en forme de treillis ou de tissu, ou perforé.

3. Procédé de fabrication selon la revendication 1 ou 2,
**caractérisé en ce qu'**
on utilise un élément séparateur (5) suffisamment souple, plus petit que la couche de mousse (2), de préférence non adhérent.

4. Procédé de fabrication selon l'une des revendications précédentes,
**caractérisé en ce qu'**
on utilise un élément séparateur (5) dont la surface est munie d'un revêtement identique à un profil de brosse avec des poils et/ou non adhérent.

5. Procédé de fabrication selon l'une des revendications précédentes,
**caractérisé en ce que**
l'élément séparateur (5) est posé sur la couche support (1) préfabriquée avant de créer la couche de mousse (2), et qu'il y est fixé de manière adaptée.

6. Procédé de fabrication selon l'une des revendication 1 à 4,
**caractérisé en ce que**
l'élément séparateur (5) est intégré dans la couche support (1) lors de la fabrication de celle-ci.

7. Procédé de fabrication selon la revendication 6,
**caractérisé en ce que**
l'élément séparateur (5) est formé par une section orientée de manière adaptée d'une couche supplémentaire (6) partiellement parallèle à la couche support (1) et qui fonctionne comme une baguette articulée (7) pour la couche support (1) à proximité de la ligne de rupture d'un coussin gonflable (4).

8. Procédé de fabrication selon l'une des revendications précédentes,
**caractérisé en ce que**
l'extrémité de l'élément séparateur (5) opposée à la couche support (1) est maintenue par une baguette de serrage ou similaire dans l'outil correspondant lors de la fabrication de la couche de mousse (2).
